# EUROPÄISCHE PATENTANMELDUNG

(11) **EP 0 638 352 A1**
(43) Veröffentlichungstag der Anmeldung: **15.02.1995**
(21) Anmeldenummer: 94109119.1
(22) Anmeldetag: 14.06.1994
(51) Int. Cl.: B01D 63/10, B01D 63/14, B01D 53/00

(54) **Membranmodul zur Entfernung von gasförmigen Stoffen aus einem Gasstrom**

(30) Priorität: 09.08.1993 DE 4326677
(71) Anmelder: W.L. GORE & ASSOCIATES GmbH, D-85636 Putzbrunn (DE)
(72) Erfinder: Wiemer, Thorsten, D-83512 Wasserburg (DE); Gruber, Franz, D-83620 Feldkirchen/Westerham (DE)
(74) Vertreter: Klunker . Schmitt-Nilson . Hirsch

(57) **Zusammenfassung**

Bei einem Membranmodul (10) zur Entfernung von gasförmigen Stoffen aus einem Gasstrom, insbesondere für die Abgasreinigung mit Hilfe von Mikroorganismen, ist eine endlose flexible Membrantasche (12) vorgesehen, die zusammen mit einer flexiblen Stützstruktur (14) als Abstandshalter in einem Gehäuse zusammengefaltet oder gewickelt angeordnet ist und den Innenraum des Gehäuses im wesentlichen ausfüllt. Die Dicke der Stützstruktur (14) bestimmt die Weite des Raumes, der zwischen den einzelnen, übereinander angeordneten Lagen der Membrantasche (12) freibleibt und der von dem zu reinigenden Gas durchströmt werden muß. Die Membrantasche (12) wird von einem einzigen Zulauf (18) mit einer flüssigen Reaktionsmischung beschickt und durch einen einzigen Ablauf (20) entleert, wobei der Gasstrom das Gehäuse und die Stützstruktur (14) durchströmt, die zwischen den einzelnen Lagen der Membrantasche (12) angeordnet ist. Für die Membrantasche (12) wird insbesondere eine mikroporöse gereckte PTFE-Membran verwendet, die eine flächendeckende, kontinuierliche Beschichtung aus einem hydrophilen Material, insbesondere mit einer Wasserdampfdurchlässigkeit von wenigstens 1000 g pro m² und Tag aufweist.

## Beschreibung

Die Erfindung betrifft ein Membranmodul Zur Entfernung von gasförmigen Stoffen aus einem Gasstrom, mit in einem Gehäuse angeordneten, flächigen Membrantaschen aus einem flüssigkeitsdichten Material, die parallel zueinander und parallel zur Strömungsrichtung des Gasstromes angeordnet sind, wobei die Membrantaschen zur Aufnahme einer Suspension von Mikroorganismen oder einer anderen flüssigen Reaktionsmischung eingerichtet und über einen Zulauf beschickbar sind und einen Ablauf entleerbar sind und zwischen den Membrantaschen Abstandshalter vorgesehen sind, die einen Mindestabstand zwischen den Membrantaschen definieren, so daß durch die dadurch gebildeten Räume der Gasstrom fließen kann. Die Erfindung betrifft weiterhin eine Vorrichtung bei der die erfindungsgemäßen Module Verwendung finden, sowie ein Verfahren zur Entfernung von gasförmigen Stoffen aus einem Gasstrom.

Aus der DE-A-40 27 126 sind bereits Membranmodule der eingangs bezeichneten Art bekannt. Diese Module bestehen aus einem kastenförmigen Gehäuse, in dein die Membrantaschen, deren Außenmaße den Innenmaßen des Gehäuses entsprechen, angeordnet sind. Zwischen den Membrantaschen sind entlang der seitlichen Kanten stabförmige Abstandselemente vorgesehen, die einen bestimmten Abstand zwischen den Membrantaschen definieren. Das Membranmaterial Kann zusätzlich Erhöhungen oder Verstärkungen aufweisen, so daß ein bestimmter Abstand zwischen zwei Membrantaschen über die gesamte Fläche sichergestellt ist. Jede der einzelnen Membrantaschen ist mit einer Zuleitung und einer Ableitung versehen, die in eine gemeinsame Versorgungs- bzw. Entsorgungsleitung münden. Das verwendete Membranmaterial ist gasdurchlässig und flüssigkeitsdicht, vorzugsweise wird eine Polyurethanfolie eingesetzt.

Verwendet man ein derartiges Membranmodul beispielsweise zur Abgasreinigung, sind erhebliche Membranflächen erorderlich. Um dieses Verfahren wirtschaftlich einsetzen zu können, muß der Herstellungsaufwand minimiert werden. Das Anschließen der für jede Tasche separaten Zu- und Ableitungen an eine gemeinsame Versorgungs- und Entsorgungsleitung ist zeitaufwendig, kompliziert und störungsanfällig. Als weiterer Nachteil muß die Tatsache angesehen werden, daß sich die Membrantaschen unter dem Gewicht der in den Taschen befindlichen Flüssigkeit einseitig auswölben und dadurch den freien Strömungsquerschnitt für den Gasdurchtritt verringern. Eine exakte Berechnung des Strömungswiderstandes ist unter diesen Umständen nur schwer möglich, da er sich zeitabhängig ändert.

Sind die Seitenflächen der Membrantaschen mit Erhöhungen versehen, verteuert sich die Herstellung der Membran und der Wirkungsgrad des Stoffaustauschs durch die Membran hindurch wird herabgesetzt. Da die Membrantaschen lediglich seitlich gehalten sind, kann es vorkommen, daß die flexible Vorderkante unter dem Staudruck des Gasstromes umklappt und benachbarte, für den Gasdurchtritt vorgesehene Zwischenräume verschließt.

Im Hinblick auf die vielfältigen Einsatzmöglichkeiten derartiger Module, beispielsweise zur Abgasreinigung, besteht ein Bedürfnis nach einem Membranmodul, das einfach aufgebaut ist und daher wirtschaftlich gefertigt werden kann, und das so konstruiert ist, daß es auch über längere Betriebszeiten hinweg definierte Stoffaustauschverhältnisse bietet. Darüberhinaus soll der Wirkungsgrad der bekannten Membranmodule verbessert werden.

Erfindungsgemäß wird diese Aufgabe durch die im Kennzeichen des Anspruchs 1 aufgeführten Merkmale gelöst. Entscheidend bei der erfinderischen Lösung war die Erkenntnis, nicht eine Vielzahl von separaten Membrantaschen zu verwenden, sondern eine einzige endlose Membrantasche einzusetzen und diese derart zu falten bzw. zusammenzulegen, daß sie den Innenraum des Gehäuses des Membranmoduls im wesentlichen ausfüllt. Selbstverständlich muß die Faltung so locker sein, daß die flüssige Reaktionsmischung die Faltenbereiche der Membrantasche ohne zuviel Druckverlust durchströmen kann und außerdem eine freie Umströmung der Außenfläche der Lagen der Membrantasche durch den Gasstrom möglich ist.

Der Abstand zwischen den einzelnen Lagen der übereinandergefalteten Membrantasche wird durch eingeschobene Stützstrukturen sichergestellt. Bei diesen Stützstrukturen handelt es sich vorzugsweise um ein faseriges Gewirke oder Gewebe, vorzugsweise aus Polypropylen oder PVC. Die Stützstrukturen sollen möglichst geschlossene Oberflächen aufweisen, so daß sich die Membrane darauf abstützen kann. Andererseits muß der Zwischenraum zwischen den beiden Oberflächen für einen Gasstrom ohne zu großen Druckverlust durchströmbar sein. Vorteilhaft werden für ein solches Abstandsgewebe oder Gewirke Fasern verwendet, die relativ biegesteif und elastisch sind.

Nach einer Ausführungsform der Erfindung ist das Gehäuse des Membranmoduls kastenförmig, in dem Kasten sind an gegenüberliegenden Seitenwänden Positionsstangen angeordnet, die über die gesamte Länge des Kastens verlaufen. Um diese Positionsstangen herum wird die Membrantasche gefaltet, so daß im Ergebnis eine Leporellofaltung gebildet wird. Vorzugsweise wird Anfang und Ende der Membrantasche an der Innenwand des Gehäuses fixiert. Am Anfang und Ende der Membrantasche ist ein Einlauf- bzw. Auslaufstutzen befestigt. Die Stutzen können in die Membrantasche eingeklebt, eingeschweißt, eingegossen oder auch nur eingeklemmt sein. Von Bedeutung ist in diesem Zusammenhang lediglich, daß nicht eine Vielzahl separater Membrantaschen jeweils einen Einlauf und einen Auslauf benötigen, sondern die endlose Membrantasche mit einem einzigen Zulauf und einem einzigen Auslauf auskommt. Der Fertigungs- und Montageaufwand wird dadurch erheblich verringert.

Die Abmessungen der Stützstruktur, deren Zusammensetzung und Aufbau oben bereits beschrieben wurde, sind so, daß sie von den seitlich angeordneten Positionierstangen gehalten werden. Die Stützstruktur ist also nicht endlos, wie die Membrantasche, sondern besteht aus mehreren Stücken, deren Abmessungen in etwa dem Grundriß des kastenförmigen Gehäuses entsprechen.

Andere Gehäuseformen für das Membranmodul sind ebenfalls möglich. So kann die Membrantasche und eine entsprechende Länge einer ebenfalls endlosen Stützstruktur spiralig zusammengewickelt und in ein rundes Gehäuse eingeschoben werden. Es ist in diesem Fall allerdings erforderlich die Stützstruktur gegenüber der Membrantasche zu fixieren. Dies kann entweder durch das Gehäuse längs durchsetzende Positionierstäbe erfolgen oder aber dadurch, daß die Stützstruktur punktförmig mit der Membrantasche durch Verkleben oder Verschweißen verbunden ist.

Da die Membrantaschen seitlich beschickt werden, sind in den Membrantaschen vorzugsweise linienartige Klebe- oder Schweißnähte angeordnet, durch die Verteilungskanäle gebildet werden, die eine möglichst gleichmässige Durchströmung der Membrantaschen über die gesamte Breite sicherstellen. Diese Verbindungslinien sind allerdings immer wieder unterbrochen, um eine Verwirbelung und einen Austausch zwischen den diversen Verteilungskanälen zu ermöglichen.

Zur großtechnischen Anwendung können mehrere Membranmodule in Serie oder auch parallel geschaltet werden. Durch die Möglichkeit des modularen Aufbaus können ohne weiteres Systeme unterschiedlicher Größenordnung zusammengestellt werden.

Das erfindungsgemäße Membranmodul ist kompakt, besteht aus wenigen Einzelteilen und ist daher ohne großen Aufwand zusammenzubauen. Es bietet definierte Strömungsverhältnisse, die auch über längere Betriebszeiten konstant bleiben. Wird die Reaktionsflüssigkeit bzw. die darin suspendierten Mikroorganismen inaktiv, kann die Membrantasche dem Modul ohne großen Aufwand entnommen, gereinigt und eine neue Tasche eingesetzt werden.

Der Wirkungsgrad des Stoffaustausches in derartigen Modulen hängt, neben der Konstruktion der Module, die sich in allererster Linie auf die Strömungsverhältnisse auswirkt, auch von der Eignung der eingesetzten Membran ab. Neben der bereits erwähnten Polyurethanfolie ist es aus der Mikrobiologie bekannt, Zellkulturen in Membrantaschen zu züchten, die luftdurchlässig und flüssigkeitsdicht sind. Als Material für diese Membranen wurde Polyethylen und Polypropylen vorgeschlagen (US-A-3 184 395), Ethylen-Propylen-Copolymer (US-A-3 941 662) oder auch Silikongummi (WO 90/10690). Alle diese Membranen haben die Eigenschaft, daß sie gasdurchlässig sind, d.h., daß sie jedenfalls Sauerstoffmoleküle passieren lassen. Es wurde auch bereits vorgeschlagen, eine mikroporöse, gereckte PTFE-Membran einzusetzen, wie sie unter dem Handelsnamen GORE-TEX (eingetragenes Warenzeichen der W.L. Gore & Associates) auf dem Markt erhältlich sind. Wegen ihrer Eigenschaft, Wasserdampf und Luft durchzulassen, Wasser aber zurückzuhalten, werden derartige Membranen im großen Maßstab bei der Herstellung von Sportkleidung verarbeitet. Die Herstellung derartiger Membranen ist in den US-Patentschriften 3 953 556 und 4 187 390 beschrieben.

Obwohl Membranmodule, die mit einer PTFE-Membran ausgerüstet sind, sich ganz allgemein als Reaktoren für das Stoffaustauschsystem gasförmig/flüssig eignen, hat sich gezeigt, daß bei der Abgasreinigung mit Hilfe von Mikroorganismen den Mikroorganismen durch die mikroporöse Membranstruktur zuviel Sauerstoff zugeführt wird. Diese Sauerstoffzufuhr beschleunigt das Wachstum bzw. die Vermehrung der Mikroorganismen in solchem Maße, daß in kurzer Zeit eine Verstopfung der Membrantaschen zu beobachten ist. Der Strömungswiderstand der Membrantaschen wird dann so hoch, daß mit Druckdifferenzen gearbeitet werden müßte, denen die Membrantaschen mechanisch nicht standhalten können. Es bestand daher ein Bedürfnis für eine Membran, die in erster Linie für die Abgasreinigung mit Hilfe von Mikroorganismen eingesetzt werden kann.

Erfindungsgemäß hat sich eine mikroporöse gereckte PTFE-Membran als geeignet erwiesen, die eine flächendeckende, kontinuierliche Beschichtung aus einem hydrophilen Material aufweist. Das hydrophile Material muß eine Wasserdampfdurchlässigkeit von wenigstens 1000 g pro Quadratmeter und Tag aufweisen. Solche Eigenschaften hat beispielsweise Polyurethan, das als Beschichtung in einer Menge von 1 bis 15 g pro Quadratmeter auf die PTFE-Folie aufgebracht werden kann. Die hydrophile Schicht kann aber auch ein Polyether-Polyurethan oder eine Membran aus Perfluorsulfonsäure sein. Die Materialkombinationen entsprechen denen, die auch in der Bekleidungsindustrie eingesetzt werden. So ist in der US-A 4 194 041 ein zweischichtiges Laminat aus einer mikroporösen PTFE-Schicht und einer hydrophilen Schicht beschrieben, das im Rahmen dieser Erfindung ebenfalls eingesetzt werden Kann. Auf den Offenbarungsgehalt dieser Patentschrift wird ausdrücklich Bezug genommen.

Da der Wirkungsgrad des Stoffaustausches direkt von der Dicke der Membran abhängt, werden häufig Membranen verwendet, die so dünn sind, daß sie schlechte mechanische Eigenschaften haben, beispielsweise leicht einreißen. Um dies zu verhindern, werden die Membranen vorzugsweise mit einem luftdurchlässigen Trägermaterial verbunden, das vorzugsweise ein Vlies, eine Lochfolie oder ein textiles Material sein kann. Wenn das Schichtmaterial zu einer Membrantasche verarbeitet wird, muß darauf geachtet werden, daß das Trägermaterial nicht auf der Innenseite der Membrantasche, also auf der Flüssigkeitsseite zu liegen kommt, da die Mikroorganismen in die poröse Struktur des Trägermaterials eindringen und dessen Poren verstopfen. Bei Membranen, die mit einem Trägermaterial laminiert sind, muß also dieses Trägermaterial an der Außenseite der Membrantasche angeordnet sein, d.h. der Seite, die mit dem Gasstrom beaufschlagt wird.

Um die Schwierigkeiten der Handhabung einer unsymmetrischen Bahn zu vermeiden, kann auch eine symmetrisch aufgebaute Membran verwendet werden, in diesem Fall wird das Trägermaterial zwischen zwei mikroporösen PTFE-Folien eingeschlossen, die jeweils mit einem hydrophilen Material, vorzugsweise Polyurethan beschichtet sind. Die Vorteile dieses symmetrischen Membranaufbaus werden bis zu einem gewissen Grad durch ihren geringeren Wirkungsgrad aufgewogen.

Die PTFE-Folie und die hydrophile Beschichtung haben vorzugsweise die gleiche Dicke, die im Bereich von jeweils 0,005 bis 1,5 mm liegen. Vorzugsweise betragen die Dicken 0,02 bis 0,1 mm.

Es hat sich gezeigt, daß die erfindungsgemäße beschichtete PTFE-Membran besonders vorteilhaft zur Entfernung von Noₓ-Molekülen aus Abgasen eingesetzt werden kann. Es wird vermutet, daß die Membran in diesem Fall als eine Diffusionsmembran wirkt, da durch die Beschichtung der mikroporöse Charakter der PTFE-Membran verlorengeht, d.h. es findet keine Durchströmung der Membran mehr statt. Die hydrophile Beschichtung, die vorzugsweise auf der Seite der flüssigen Reaktionsmischung angeordnet sein sollte, gewährleistet eine gewisse Wasseraufnahme. Durch diese Quellung wird der beabsichtigte Stoffaustausch vermutlich ebenfalls begünstigt.

Nachfolgend soll ein Ausführungsbeispiel der Erfindung anhand der beigefügten Zeichnung beschrieben werden. Darin zeigen
- **Fig. 1:**: Eine schematische Seitenansicht eines Membranmoduls,
- **Fig. 2:**: einen schematischen Querschnitt durch das Membranmodul.

Das Membranmodul 10 besteht aus einer Vielzahl von übereinander angeordneten Lagen einer Membrantasche 12, die durch eine zwischen die Lagen geschobene Stützstruktur 14 auf Abstand gehalten werden. Die Dicke der Stützstruktur 14 bestimmt die Weite des Raumes, der zwischen den einzelnen Lagen der Membrantasche 12 frei bleibt und der von dem zu reinigenden Gas durchströmt werden muß.

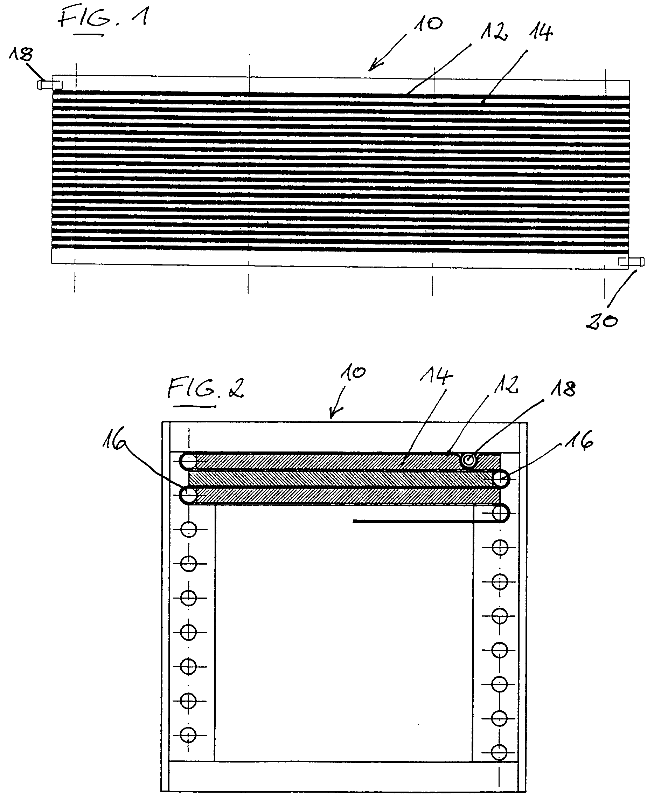

Wie besonders gut aus Fig. 2 zu ersehen ist, ist dieser freie Raum zwischen den Lagen der Membrantasche von der Stützstruktur 14 ausgefüllt. Die Stützstruktur ist ein lockeres Gewebe oder Gewirk aus einem faserigen Material mit möglichst geschlossenen Oberflächen und einer möglichst offenen Porenstruktur über seine Breite. Die geschlossene Oberfläche dient der Auflage und Stützung der Membranfolie, die mechanisch wenig belastbar ist. Die offenporige Struktur soll dem durchströmenden Gas möglichst wenig Widerstand entgegensetzen.

Gemäß der gezeigten Ausführungsform hat das Membranmodul ein Gehäuse in Kastenform. Seitlich einander gegenüberliegend sind in dem Gehäuse Positionierstäbe 16 angeordnet, um die herum die Membrantasche 12 gewickelt ist, so daß Lage auf Lage zu liegen kommt. Die Positionierstäbe dienen der Fixierung des Stapels. Ohne diese Stäbe oder eine entsprechende Positionierhilfe würde sich der Stapel unter der Wirkung der Strömungskräfte der flüssigen Reaktionsmischung und des Gasstromes in undefinierter Weise verlagern bzw. verformen. Natürlich wird die Membrantasche nicht so eng um die Positionierstäbe 16 herumgelegt, wie dies in Fig. 2 schematisch dargestellt ist. Die Faltung erfolgt vielmehr so, daß auch dieser "Umkehrbereich" von der Flüssigkeit ohne großen Druckverlust umströmt werden kann.

Bei Vorliegen bestimmter Strömungsbedingungen kann unter Umständen auf die Positionierstäbe verzichtet werden. In diesem Fall ist es jedoch erforderlich, die Stützstruktur an der Membrantasche zu befestigen, was durch eine punktweise Verschweißung oder Verklebung erfolgen kann.

Die Membrantasche wird über einen einzigen Zulauf 18 versorgt und durch einen einzigen Ablauf 20 entsorgt. Eine Zusammenführung der Zuläufe und Abläufe mehrerer Membrantaschen entfällt erfindungsgemäß völlig.

Die Membrantasche ist am Deckel und Boden des Gehäuses fixiert, was in den Figuren nicht gesondert dargestellt ist.

Verwendet man die Membranmodule zur Entfernung von Noₓ-Molekülen aus Abgasen, wird die Membrantasche vorzugsweise mit einer Reaktionsmischung beschickt, die nitrifizierende Bakterien enthält. In diesem Fall besteht die Membran aus einer ersten hydrophoben Schicht aus mikroporösem gerecktem PTFE und einer zweiten hydrophilen Schicht, vorzugsweise einer Beschichtung aus Polyurethan. Die beschichtete Seite, d.h. in diesem Fall die Polyurethanschicht sollte dem Inneren der Membrantasche zugewandt sein, d.h. mit der Flüssigkeit in Kontakt stehen, wogegen die hydrophobe Schicht nach außen, d.h. der Gasseite zugekehrt ist. Für den Fall, daß die Membran noch mit einem Trägermaterial laminiert ist, sollte das Trägermaterial ebenfalls außen, d.h. auf der Seite liegen, die vom Gasstrom beaufschlagt wird.

Vorzugsweise wird an die Membrantasche eine Druckdifferenz von etwa 0,3 bar angelegt. Diese Druckdifferenz reicht, um eine gewisse Durchströmung der Membrantasche sicherzustellen. Nach längerer Betriebsdauer und entsprechender Vermehrung der Mikroorganismen steigt der Strömungswiderstand der Membrantasche und damit auch der für die Durchströmung erforderliche Differenzdruck an. Bei einem Differenzdruck von etwa 0,6 bar muß die Membrantasche ausgewechselt werden. Für das Auswechseln wird die Membrantasche aus dem Gehäuse herausgenommen und gereinigt werden, sie kann sodann wieder neu mit Reaktionsmischung gefüllt und wiederverwendet werden.

Mehrere derartige Module können nun in bekannter Art und Weise in entsprechenden Gehäusen angeordnet und entsprechend verschaltet werden. Die einfache und wenig aufwendige Konstruktion der Module ermöglicht einen wirtschaftlichen Einsatz auch auf anderen Gebieten als der mikrobiologischen Abgasreinigung. Ein Einsatz auf letztgenanntem Gebiet ist jedoch besonders vielversprechend. Insbesondere, wenn als Membranmaterial eine mit Polyurethan beschichtete, mikroporöse und gereckte PTFE-Membran eingesetzt wird.

## Patentansprüche

1. Membranmodul zur Entfernung von gasförmigen Stoffen aus einem Gasstrom mit in einem Gehäuse angeordneten flächigen Membrantaschen aus einem flüssigkeitsdichtem Material, die parallel zueinander und parallel zur strömungsrichtung des Gasstromes angeordnet sind, wobei die Membrantaschen zur Aufnahme einer flüssigen Reaktionsmischung oder einer Suspension von Mikroorganismen eingerichtet und über einen Zulauf beschickbar und über einen Ablauf entleerbar sind, und zwischen den Membrantaschen Abstandshalter vorgesehen sind, die einen Mindestabstand zwischen den Membranen definieren, wodurch Räume gebildet werden, durch die der Gasstrom fließen kann,
dadurch gekennzeichnet, daß eine endlose flexible Membrantasche, die zusammen mit einer flexiblen Stützstruktur als Abstandshalter in dem Gehäuse zusammengefaltet oder gewickelt angeordnet ist und den Innenraum des Gehäuses im wesentlichen ausfüllt, daß der Wickel oder Stapel im Gehäuse fixiert ist, daß die Membrantasche von einem einzigen Zulauf mit der flüssigen Reaktionsmischung beschickt und durch einen einzigen Ablauf entleerbar ist, und der Gasstrom das Gehäuse und die Stützstruktur durchströmt, die zwischen den einzelnen Lagen der Membrantasche angeordnet ist.

2. Membranmodul nach Anspruch 1, dadurch gekennzeichnet, daß der Wickel oder Stapel durch im Gehäuse befestigte Positionierstäbe fixiert ist.

3. Membranmodul nach Anspruch 1 oder 2, dadurch gekennzeichnet, daß die Stützstruktur aus Fasern besteht, die einerseits weitgehend geschlossene Oberflächen zur Anlage an die Membrantasche bilden, andererseits zwischen den Oberflächen so locker angeordnet sind, daß die oberflächenparallele Durchströmung der Stützstruktur nur unwesentlich behindert wird, die Stützstruktur aber nur schwer komprimierbar ist.

4. Membranmodul nach Anspruch 3, dadurch gekennzeichnet, daß die Stützstruktur eine offenporige Struktur aus biegesteifen, elastischen Fasern ist.

5. Membranmodul nach einem der Ansprüche 1 bis 4, dadurch gekennzeichnet, daß die Stützstruktur mit der Membrantasche punkt- oder linienweise verklebt oder verschweißt ist.

6. Membranmodul nach einem der Ansprüche 1 bis 5, dadurch gekennzeichnet, daß das Gehäuse des Membranmoduls kastenförmig ist, wobei die Positionierstäbe, die sich über die gesamte Länge des Gehäuses erstrecken, an zwei gegenüberliegenden Seiten übereinander angeordnet sind und daß die Membrantasche in Form einer Leporellofaltung um die einzelnen Positionierstäbe herumgelegt ist.

7. Membranmodul nach Anspruch 6, dadurch gekennzeichnet, daß die Stützstruktur, deren Umriß im wesentlichen dem Grundriß des kastenförmigen Gehäuses entspricht, jeweils zwischen zwei aufeinanderliegenden Lagen der Membrantasche angeordnet ist, und von den Positionierstäben seitlich gehalten wird.

8. Membranmodul nach Anspruch 7, dadurch gekennzeichnet, daß Anfang und Ende der Membrantasche jeweils an der Innenwand des Gehäuses festgelegt sind.

9. Membranmodul nach einem der Ansprüche 1 bis 8, dadurch gekennzeichnet, daß die Reaktionsmischung und der Gasstrom quer zueinander strömen.

10. Membranmodul nach Anspruch 9, dadurch gekennzeichnet, daß die Membrantasche innere Verteilungskanäle aufweist, die durch linienartige Verschweißungen gebildet sind.

11. Membranmodul nach Anspruch 10, dadurch gekennzeichnet, daß die linienartigen Verschweißungen nicht durchgehend sind, so daß Vermischungen zwischen den Verteilungskanälen erfolgen können.

12. Vorrichtung zur Entfernung von gasförmigen Stoffen aus einem Gasstrom, dadurch gekennzeichnet, daß in einem Gehäuse mehrere Membranmodule nach einem der Ansprüche 1 bis 11 derart angeordnet sind, daß sie von einem Gasstrom parallel oder nacheinander durchströmbar sind.

13. Verfahren zur Entfernung von gasförmigen Stoffen aus einem Gasstrom durch Vorbeiführen des Gasstromes an einer flüssigkeitsdichten Membran, die einen Raum begrenzt, der eine flüssige Reaktionsmischung, insbesondere eine wässrige Suspension von Mikroorganismen enthält, dadurch gekennzeichnet, daß die Membran eine erste hydrophobe Schicht aufweist, die eine mikroporöse, gereckte PTFE-Folie ist, und eine zweite hydrophile Schicht, die mit der ersten Schicht verbunden ist, und die eine Wasserdampfdurchlässigkeit von über 1000g pro m² und Tag besitzt.

14. Verfahren nach Anspruch 13, dadurch gekennzeichnet, daß die hydrophobe Schicht und die hydrophile Schicht jeweils eine Dicke von 5 - 1500 µ vorzugsweise 20 - 100 µ aufweisen.

15. Verfahren nach Anspruch 13 oder 14, dadurch gekennzeichnet, daß die hydrophile Schicht eine Beschichtung aus Polyurethan ist.

16. Verfahren nach Anspruch 15, dadurch gekennzeichnet, daß die Beschichtung in einer Menge von 5 - 15g pro m² aufgebracht wird.

17. Verfahren nach Anspruch 13 oder 14, dadurch gekennzeichnet, daß die hydrophile Schicht Polyether-Polyurethan ist.

18. Verfahren nach Anspruch 13 oder 14, dadurch gekennzeichnet, daß die hydrophile Schicht eine Membran aus Perfluorsulfonsäure ist.

19. Verfahren nach einem der Ansprüche 13 bis 18, dadurch gekennzeichnet, daß die hydrophobe Schicht und die hydrophile Schicht ein Laminat bilden.

20. Verfahren nach einem der Ansprüche 13 bis 19, dadurch gekennzeichnet, daß die Membran mit einem luftdurchlässigen Trägermaterial verbunden ist, daß vorzugsweise aus Flies, Lochfolie oder Textil besteht.

21. Verfahren nach Anspruch 20, dadurch gekennzeichnet, daß das Trägermaterial zwischen zwei Membranen eingeschlossen ist.

22. Verfahren nach Anspruch 21, dadurch gekennzeichnet, daß die hydrophile Schicht der Membran außen liegt.
